# EUROPEAN PATENT SPECIFICATION

(11) **EP 4 119 788 B1**
(45) Date of publication and mention of the grant of the patent: **20.03.2024**
(21) Application number: 22183009.4
(22) Date of filing: 05.07.2022
(51) Int. Cl.: F03B 13/14

(54) **AN APPARATUS AND A METHOD FOR EXTRACTING HYDROSTATIC ENERGY FROM SEA WAVES**
VORRICHTUNG UND VERFAHREN ZUM EXTRAHIEREN VON HYDROSTATISCHER ENERGIE AUS MEERESWELLEN
APPAREIL ET PROCÉDÉ POUR EXTRAIRE DE L'ÉNERGIE HYDROSTATIQUE À PARTIR DES VAGUES DE LA MER

(30) Priority: 13.07.2021 NO 20210900
(43) Date of publication of application: 18.01.2023
(73) Proprietor: EurEK AS, 4280 Skudeneshavn (NO)
(72) Inventor: Knutsen, Knut Arild, 4280 Skudeneshavn (NO)
(74) Representative: Håmsø Patentbyrå AS

(56) References cited:
- EP-A1- 0 892 889
- EP-B1- 0 892 889
- JP-A- S57 183 574
- US-A- 3 353 787
- US-A1- 2011 227 345

## Description

The present invention is related to an apparatus and a method for dampening sea waves.

More particularly, the present invention is related to an apparatus and a method that provides an effect on sea waves that to some extent be compared with the effect a kelp forest provides on littoral and sublittoral zones of a sea, such as an ocean, with respect to at least reducing a crest of ocean waves and swells. The apparatus disclosed herein achieves this effect by extracting at least hydrostatic energy from waves and, in one embodiment, transfers some of the hydrostatic energy into electric energy.

Publication JP 557183574 A discloses a submerged device and method for converting wave energy. The device comprises a first flexible air chamber spaced-apart from a second flexible air chamber, wherein both chambers can operate between a contracted state and an expanded state. The flexible chambers are in gas communication with an air turbine via a connection pipe.

Publication JP 559162374 A discloses an apparatus comprising a plurality of first and second submerged air-filled bags responsive to various hydrostatic pressure. The apparatus further comprises an air turbine operatively connected to the bags.

GB 2532074 A discloses a wave power converter comprising a submerged compressible airtight bag inflated with gas under pressure, surrounded by water on all sides not on the seabed nor attached to any fixed structure said bag supporting a ballast weight and mechanically connected to a float located above it. The wave power converter further comprises a second airtight vessel communicating with said compressible bag via a tube furnished with power conversion means which converts a flow of gas into useful power transmitted to shore or used on board.

US 3353787 A discloses a system utilizing static wave energy comprising a number of submerged flexible rubber tubes connected to a power station on the shore.

In this document the term sea means an ocean or a lake. Thus, when relevant, the term ocean is also used. When installed in an ocean, the apparatus may be installed both at a coastal area and offshore.

The apparatus is primarily adapted to extract hydrostatic energy form the waves but may also extract some kinetic energy from the waves.

Also EP 0 892 889 A1 discloses a system which uses the static wave energy.

Sea waves may have detrimental effect on manmade structures above or below the surface but also on erosion in coastal and shore areas. Due to increased kelp harvesting, natural dampening of the ocean waves otherwise provided by a kelp forest, is in some areas reduced. Further, climate changes result in more extreme weather like severe storms that may result in larger sea waves.

There are known several solutions of reducing the potential detrimental effect of sea waves. Examples of such solutions are break waters, gabions and groynes installed at least partly in the sea, normally near land, and revetments and so-called sea walls arranged on land. At least some of these may be regarded as permanent installations and may for some people represent a negative visual appearance.

There is therefore a need for an apparatus for dampening the effect of sea waves that can be installed temporarily, and that does not have to protrude above sea level, although a portion of the apparatus may protrude above sea level.

The invention has for its object to remedy or to reduce at least one of the drawbacks of the prior art, or at least provide a useful alternative to prior art.

The object is achieved through features, which are specified in the description below and in the claims that follow.

The apparatus according to the invention is configured for dampening at least hydrostatic energy from sea waves by extracting primarily hydrostatic energy from sea waves, while the apparatus at the same time can be arranged below sea level and secured to a seabed. Embodiments of the apparatus resembles to a certain extent the effect of kelp and may further be configured for harvesting energy from the sea waves.

The invention is defined by the independent patent claims. The dependent claims define advantageous embodiments of the invention.

In a first aspect the invention, an apparatus for extracting at least hydrostatic energy from sea waves is provided, wherein the apparatus comprises:
- at least one first compartment being in fluid communication with at least one second compartment via a manifold having an internal volume filled with a liquid, each of the compartments having an internal volume being variable between a first internal volume, and a second internal volume being smaller than the first internal volume;
   wherein the at least one first compartment is spaced-apart from the at least one second compartment; and
   wherein the apparatus in a position of use is at least partly submerged and holds a total volume of liquid that is larger than a volume of liquid within the manifold, but less than a sum of the volume of the liquid within the manifold and a total first volume of the at least one first compartment and the at least one second compartment. The volume of liquid within the manifold is larger than the total volume of liquid within the at least one first compartment and the at least one second compartment. This has the effect of allowing reciprocating liquid into and out of the manifold in response to hydrostatic pressure variations caused by troughs and crests of the sea waves. In certain embodiments, a main purpose of the manifold is to act as a buffer for liquid flowing into and out of each compartment in response to varying hydrostatic pressure caused by the sea waves.

Preferably, the manifold is dimensionally stable, meaning that the manifold in a position of use does not change its form in response to varying hydrostatic pressure on the outside of the manifold.

In one embodiment, the at least one first compartment and the at least one second compartment may be oblong, wherein a first end portion of each compartment is operatively connected to a respective fluid communication port of the manifold. However, the compartments may in alternative embodiments have any suitable forms, wherein a portion of the compartments are operatively connected to a respective fluid communication port of the manifold.

In one embodiment, and wherein the at least one first compartment and the at least one second compartment are oblong, a second end portion of each compartment may be located at a higher elevation in the water than the first end portion. Thus, in such an embodiment the at least two compartments extend from the manifold towards the surface of the water. However, in an alternative embodiment and independently of the form of the at least two compartments, the compartments may extend outwardly in any direction from the manifold, such as downwards, sideways and in any direction therebetween. Except from the portion of the compartments being operatively connected to the manifold, the compartments are closed to prevent fluid communication between the compartment and the ambient water. For example, compartments having an oblong form may be provided with a closure in the second end portion.

Compartments having an oblong form may in one embodiment be provided in a flexible material. In such an embodiment, the second end portion is provided with a closure. In an alternative embodiment, a compartment having an oblong form may be provided by means of a stiff, tubular body housing an axially movable piston having one of its piston surfaces exposed to the liquid within the compartment, and on the other piston surface exposed to ambient water. Thus, the piston defines the internal volume of the compartment.

Depending on a desired orientation of the compartments with respect to the manifold, the compartments may be provided with buoyancy means or weight means. If it is required to provide an apparatus that to some extent is buoyant, buoyancy elements may be attached to the apparatus. Alternatively the buoyancy may be provided by means of fluid within the apparatus that has lower density than the ambient water.

In a preferred embodiment, the apparatus is anchored to foundations arranged on a seabed by means of anchor lines, and the apparatus has buoyancy force keeping the apparatus above seabed so that the anchor lines are in tension. In an alternative embodiment, the manifold of the apparatus may be carried by a supporting structure extending from the seabed.

The compartments may be arranged swayable with respect to its first end portion, and thus with respect to the manifold, like a kelp sway with respect to a sea floor.

As mentioned above, the volume of liquid within the manifold is larger than the total volume of liquid within the at least one first compartment and the at least one second compartment. An effect of providing a volume of liquid within the manifold being larger than the total volume of liquid within the at least one first compartment and the at least one second compartment, is that the liquid within the manifold remains as stationary as possible when receiving liquid from and expelling liquid into the compartments in response to pressure variation towards the compartments. The reason for this is that tests surprisingly have shown that if the volume of liquid within the manifold is relatively small, a substantial portion of the liquid will be set in motion within the manifold and may thereby reduce the functionality of the apparatus. Thus, it is desired to provide a manifold acting as a "buffer" for liquid received from one of the compartments and expel or "bleed of" liquid from the manifold into at least one other compartment substantially without the liquid moving axially within the manifold between communication ports of the manifold being at the connection points for the compartments.

To maximize the energy extracting effect of the apparatus, it is an advantage if a longitudinal axis the manifold is arranged substantially in parallel to a prevailing movement direction of the sea waves or ocean swells. By arranging the manifold substantially in parallel to a prevailing movement direction of the sea waves or ocean swells, the at least two compartments will be subjected subsequently to crests and troughs.

In some areas, the waves of the sea may have a varying movement direction due to for example varying wind directions. To account for such varying movement directions of the sea waves, the apparatus is in one embodiment arranged pivotable with respect to a seabed. In such an embodiment, the apparatus is further provided with an alignment means being responsive to a direction of the sea waves.

In one embodiment, the apparatus comprises a plurality of manifolds arranged in a matrix configuration.

An advantage of providing the apparatus wherein the manifolds and thus the compartments are arranged in a matrix configuration, is that the apparatus may be effective with respect to extracting hydrostatic energy from sea waves moving in any direction.

The apparatus disclosed above has the advantage of dampening sea waves by extracting primarily hydrostatic energy from sea waves by reciprocating liquid out of and into the at least one first compartment and the at least one second compartment. The liquid moving reciprocally between the compartments and then manifold represents a valuable source of energy extracted from the sea waves. To capture some of this energy, it is an advantage if at least one of the compartments is operatively connected to the manifold via a turbine house comprising a turbine and an appurtenant generator for generating electric energy from the liquid flowing between the compartments and the manifold in response to hydrostatic pressure variation caused by the sea waves, and wherein the at least one generator is provided with a cable for transferring the electrical energy to a consumer. The at least one turbine apparatus and the appurtenant generator are of a type known per se that are commercially available in the market and will therefore not be discussed in any further details herein.

Preferably, to increase the energy harvesting capability of the apparatus, the apparatus comprises more than one turbine and appurtenant generator for harvesting energy. In one embodiment is all compartments operatively connected to the manifold via a turbine house comprising a turbine and an appurtenant generator.

The liquid within the apparatus may for example be water.

In one embodiment, the apparatus according to the invention may be arranged adjacent an offshore wind park. In such an embodiment, the electric power generated by the generators of the apparatus, may be connected to a power transfer system of the offshore wind park, and transferred to a consumer via a power transferring system of the offshore wind park.

In a second aspect of the invention, a power plant is provided, wherein the power plant comprises the apparatus according to the first aspect of the invention and provided with at least one turbine and appurtenant generator as disclosed above. In a preferred embodiment, the power plant comprises more than one turbine apparatus and appurtenant generator.

In a third aspect of the invention, a method for extracting at least hydrostatic energy from sea waves is provided, wherein the method comprises: assembling an apparatus according to the first aspect of the invention; filling the apparatus with a liquid until a volume of the liquid within the apparatus exceeds an internal volume of the manifold, but is less than a sum of the volume of the liquid within the manifold and a total first internal volume of the at least one first compartment and the at least one second compartment; and lowering the apparatus to a desired position in the sea so that the apparatus is at least partly submerged, and securing the apparatus with respect to a sea bed.

In one embodiment, the apparatus is assembled above sea level, for example on land, or on a floating vessel, for example on a barge or on a ship. In one embodiment, the apparatus is filled with a desired volume of liquid when being above sea level. However, in an alternative method, the apparatus may be filled with liquid after the apparatus has been brought into the surface of the sea. In still another embodiment, a portion of the desired volume of liquid is filled into the apparatus when being above sea level, and the rest of the desired volume of liquid is filled into the vessel after the apparatus has been brought into the surface of the sea. Filling all or a portion of the liquid into the apparatus after the apparatus the has been brought into the surface of the sea, is advantageous with respect to a total weight of the apparatus when bringing the apparatus into the sea. Thereby the apparatus may be brought into the sea by means of equipment having a lower handling capacity as compared with equipment configured for handling an apparatus filled with liquid above sea level.

Any air entrained within the compartments may be evacuated from the compartments prior to lowering the apparatus to a desired position in the sea and securing the apparatus to the seabed.

In an embodiment wherein the apparatus comprises at least one turbine apparatus and generator, and thus also may serve as a power plant according to the second aspect of the invention, the method further comprises connecting the at least one generator to a consumer by means of an electric cable.

In the following, examples of preferred embodiments are described and illustrated in the accompanying drawings, wherein:
- Figures 1a-1c: show principle sketches of a basic configuration of the apparatus according to the invention shown submerged, wherein fig. 1a shows the apparatus in a calm sea, while figures 1b and 1c show the apparatus when subject to sea waves or ocean swells;
- Fig. 2: shows in a smaller scale the apparatus in figures 1a - 1c secured to a seabed and subject to sea waves;
- Fig. 3: shows in smaller scale the apparatus in an embodiment wherein a plurality of compartments extending from a manifold; and
- Fig. 4: shows in a larger scale a portion of the apparatus comprising a plurality of manifolds interconnected in a matrix and being is in fluid communication with compartments.

Positional indications refer to the positions shown in the figures, and in a position of use of the apparatus.

In the figures, same or corresponding elements are indicated by same reference numerals. For clarity reasons, some elements may be without reference numerals in some of the figures.

A person skilled in the art will understand that the figures are just principle drawings. The relative proportions of individual elements may also be distorted.

In the figures, reference numeral 1 denotes an apparatus according to the invention. The apparatus 1 comprises at least one first compartment 3 being spaced-apart from and in fluid communication with at least one second compartment 5 via a manifold 7 filled with a liquid. The liquid is typically, but not limited to, freshwater.

The compartments 3, 5 have in the embodiment shown an oblong, tubular form. However, in alternative embodiments, the compartments may have any suitable shape or form as long as the volume of compartments are responsive to varying hydrostatic pressures.

A first end portion 31, 51 of each compartment 3, 5, respectively, is operatively connected to a respective fluid communication port 9 of the manifold 7, and wherein a second end portion 32, 52 of each compartment 3, 5, respectively, is located at a higher elevation in the water than the first end portion 31, 51 of the of the compartments 3, 5, and thus the manifold 7. Again, it should be clear that in alternative embodiments (not shown) the compartments may protrude from the manifold or manifolds in any directions, for example downwards or sideways with respect to a longitudinal axis of the manifold to which the compartments are connected.

In the embodiments shown, each compartment 3, 5 is made from a buoyant material, for example suitable, buoyant plastic material, so that the at least two compartments 3, 5 extend substantially vertically from the manifold 7 towards the surface WL of the sea. Alternatively, or additionally, to providing the compartments 3, 5 in a buoyant material, each compartment 3, 5 may be provided with one or more buoyant object secured at least to the second end portion 32, 52 of the first compartment 3 and second compartment 5, respectively. The compartments 3, 5 are in the embodiment shown made from a material being flexible between a substantially fully collapsed state, i.e., having a second internal volume, wherein an internal volume of the compartment is less than in an expanded state, i.e., having a first internal volume. The expanded state of the compartments 3, 5 is controlled by the material itself, or reinforcement means preferably integrated in the material of the compartment 3, 5, like a fire hose or rubber ball that can be flat when not being subject to an internal pressure. As an alternative to integrating the reinforcement within the material of the compartments, the reinforcement may be arranged on an outside of the compartments. A reinforcement means arranged on an outside of the compartments 3, 5 may for example be in the form of a netting sleeve or a similar volume limiting device.

Contrary to the compartments 3, 5, the manifold 7 is designed to maintain its form when subject to varying hydrostatic pressure of the ambient water. The manifold 7 may for example be made from a suitable form-stable plastic material.

From the above it will be understood that each of the compartments 3, 5 is flexible between an expanded state and compressed state, wherein the states depend on hydrostatic pressure of the ambient water surrounding the compartments 3, 5 in a position of use. Thus, when subject to a varying hydrostatic pressure caused by the sea waves or ocean swells, the compartments 3, 5 resemble a pumping device driven primarily by varying hydrostatic pressure.

A total volume of liquid within the apparatus 1 is larger than a volume of liquid within the manifold 7, but less than a sum of liquid within the manifold 7 and a total volume of the compartments 3, 5 when in an expanded stated having the first internal volume.

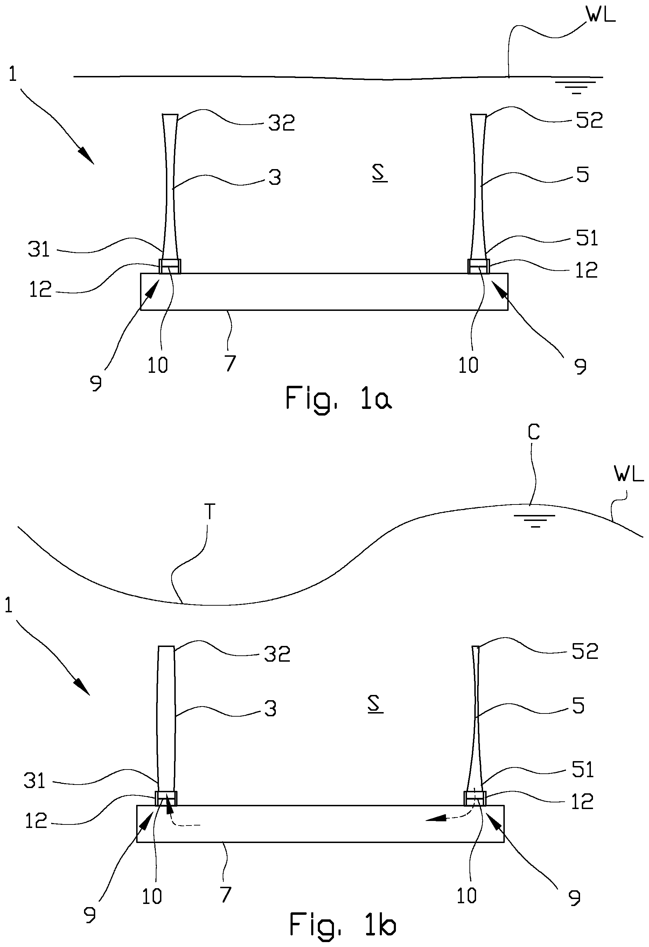

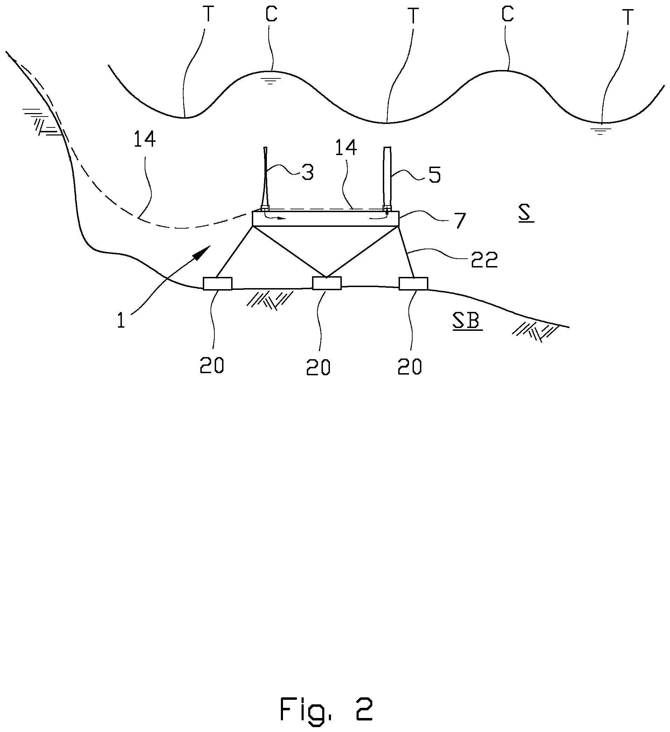

Figures 1a -2 show a near basic configuration of the apparatus 1 being submerged in a sea S. Although not shown in figures 1a -1c, the apparatus 1 is secured to a seabed SB, for example as shown in fig. 2. In the figures, the apparatus 1 is provided with turbines 10 and appurtenant generators 12. However, in a most basic configuration (not shown) the apparatus 1 is provided without the shown turbines 10 and generators 12. In such a most basic configuration the apparatus operates as a wave-dampening device only.

Fig. 1a shows the apparatus 1 submerged in a calm sea, i.e., in a sea substantially without sea waves. The hydrostatic pressure acting on the compartments 3, 5 is substantially equal. Thus, the liquid within the compartments 3, 5 is balanced, meaning that a volume of liquid within the first compartment 3 is substantially the same as the volume of liquid within the second compartment 5. In the embodiment shown, a volume of liquid within each compartment 3, 5 is about half of a maximum volume of each compartment 3, 5 when being in the first or expanded state. This has the effect that if substantially all liquid is expelled from one compartment, a corresponding volume of liquid is communicated from the manifold and into the other one of the compartments which will then be at an expanded state accommodating a volume corresponding to the volume that was expelled from the first one of the compartments. In one embodiment (not shown) a top portion of the compartments may extend above sea level when the sea is calm, or when the compartment is subject to a trough. However, it is in most cases preferred that the compartments are submerged.

In fig. 1b, the apparatus 1 is submerged in a sea S with sea waves. Due to a crest C of the sea above the second compartment 5, and a trough T of the sea above the first compartment 3, the hydrostatic pressure towards the second compartment 5 is higher than the hydrostatic pressure towards the first compartment 3. Due to the flexibility of the compartments 3, 5, liquid is expelled or urged from the second compartment 5 into the manifold 7 and a corresponding volume of liquid being in the manifold 7 at the communication port 9 of the first compartment 3, is expelled or urged into the first compartment 3, as indicated by dotted arrows.

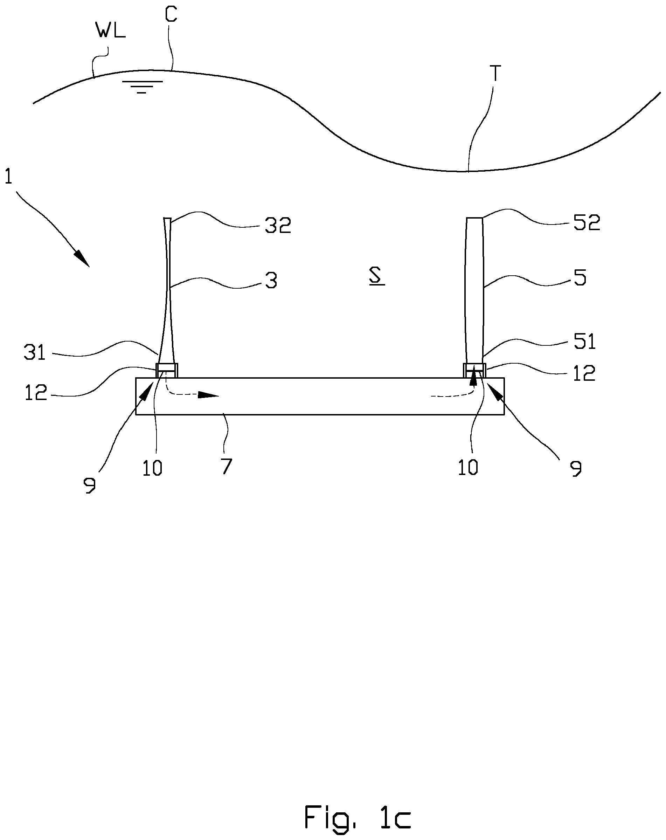

Fig. 1c shows the waves in fig. 1b having moved so that the crest C of the sea is above the first compartment 3 and the trough T of the sea is on top of the first compartment 3. The liquid is in fig. 1c urged from the first compartment 3 and into the manifold 7 when a corresponding volume of liquid being in the manifold 7 at the communication port 9 of the second compartment 5 is expelled or urged into the second compartment 5.

In this way, the liquid oscillates between the two compartments 3 and 5 and the manifold 7 which receives and delivers liquid from and to the compartments 3, 5. Thus, the manifold 7 acts as a "buffer".

When the liquid oscillates between the compartments 3, 5 and the manifold 7, the liquid flowing out of and into the compartments 3, 5, rotates the turbines 10 and electric power is generated by the generators 12. Electric power from the generators 12 are transferred to a consumer (not shown) by means of a power cable 14 as indicated by dotted lines in fig. 2. The electric power may be transferred directly from the apparatus 1 to a consumer, or indirectly by connecting the generators 12 to another system configured for harvesting energy, such as for example an offshore wind park.

In fig. 2, the apparatus 1 is anchored to foundations 20 arranged on a seabed by means of anchor lines 22. The foundations 20 may be weight elements as indicated in the figure. The weight element may be made from concrete, for example. As an alternative to weight elements made from concrete, the foundation 20 may be provided by means of suction anchors. In still another embodiment (not shown), the manifold 7 may be carried by a supporting structure extending from the seabed SB.

The apparatus 1 is typically installed at a depth wherein a top portion of the apparatus 1, i.e., the second end portions 32, 52 of the compartments 3, 5, respectively, are positioned submerged at a desired depth. This can be from 0 (zero) to any depth, but typically 10-50m below sea level as such a depth is expected to be optimal in many typical coastal or sea locations. It may be advantageous to ensure that the apparatus 1 is installed at a depth below sea-level where the kinetic forces from the waves are reduced. The kinetic forces in the waves are substantially negligible at a depth corresponding to one half of a wavelength. However, the apparatus 1 may be design for being positioned just a very few meters below sea level but will then have to be designed for the kinetic energy from the waves. Another advantage of positioning the apparatus at a certain depth, for example a depth of more than 10 - 20m below sea level, is that it may not represent any obstruction for surface shipping traffic.

In figures 1a - 2, the distance between the first compartment 3 and the second compartment 5 is adapted to a prevailing wavelength of the sea waves at an installation location. Thus, an optimal distance between the two compartments 3, 5 shown in the basic configuration in figures 1a - 2, is about one half of the prevailing wavelength at the location wherein the apparatus shall be installed. For sea waves having a wavelength of for example 50-100m, as may occur in an ocean, an axial length of the manifold 7 of the apparatus 1 may typically be 25-50 meters to provide a desired effect for dampening the waves and generating electrical energy.

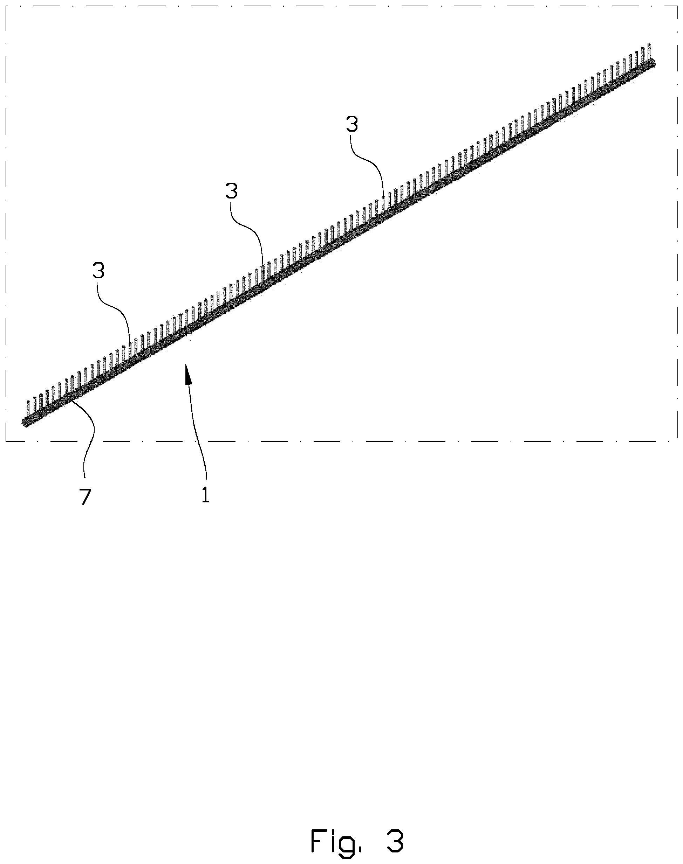

Fig. 3 shows an embodiment of the apparatus 1 wherein a plurality of compartments 3 are installed along a manifold 7 as discussed above. As compared with the basic configuration shown in the previous figures 1a - 2, the apparatus 1 shown in fig. 3 has a considerable higher efficiency with respect to extracting hydrostatic energy from the sea waves. If the apparatus is further provided with turbines 10 and appurtenant generators 12 arranged in communication with at least at some of the compartments 3 as shown in figures 1a -2, but preferably at all compartments 3, the apparatus 1 may be highly effective also with regards to producing electrical energy. A distance between the compartments 3 along the manifold 7 may for example be 1-3m.

The apparatus 1 shown in fig. 3 may be installed in the sea as disclosed above with respect to fig. 2. To maximize the energy extracting effect of the apparatus 1, the manifold 7 is arranged with its longitudinal axis being substantially in parallel to a prevailing movement direction of the sea waves.

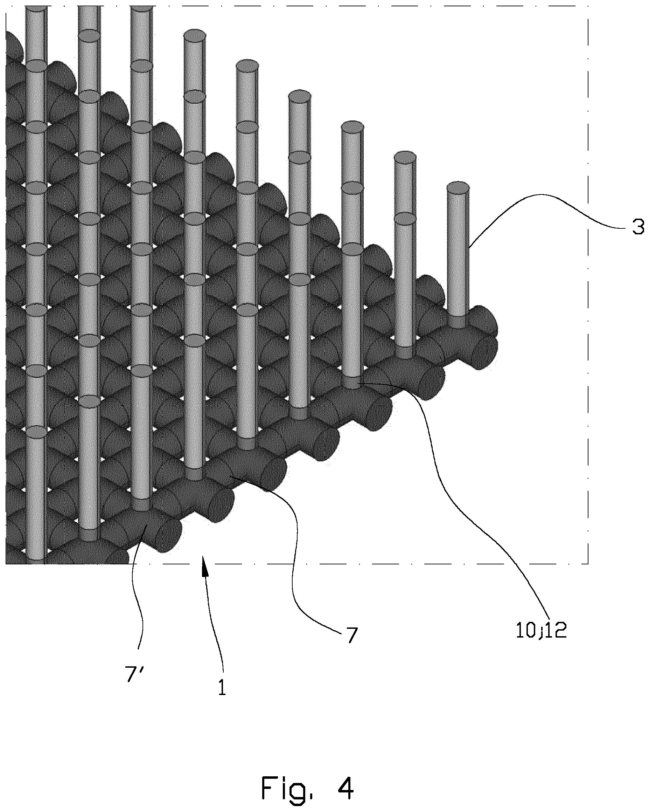

Fig. 4 shows a portion of an apparatus 1 wherein the manifolds 7, and thus the compartments 3, are arranged in a matrix. The manifold 7 comprises a plurality of interconnected tubular nodes 7' to form a manifold 7 extending substantially in a two-dimensional plane. In the embodiment shown, a compartment 3 extends upwardly from each node 7'. An advantage of the apparatus 1 shown in fig. 4 is that the hydrostatic energy from the sea waves or ocean swells may be extracted from sea waves moving in any direction. A positive side effect of arranging the apparatus in a matrix as shown in fig. 4, is that the manifold 7 and the compartments 3 provides an artificial reef that may be advantageous for marine life.

In a basic configuration without turbines and generators, the apparatus 1 may comprise no movable parts apart from any swaying of the compartments 3 extending from the manifold 7.

In an ocean there will normally be ocean swells. Thus, by providing the apparatus 1 with turbines 10 and generators 12, the apparatus 1 will be a reliable energy harvester that are less dependent on weather conditions as compared with an offshore wind park. Estimates show that the apparatus 1 may have an operating time for harvesting energy being in the range of 60-70%, and in some areas even higher. Experience shows that an offshore wind park has an operating time in the range of 30-50%.

Contrary to an offshore wind park, the apparatus 1 will in certain embodiments neither represent any obstruction to surface shipping traffic, nor any negative visual appearance.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

## Claims

1. An apparatus (1) for extracting at least hydrostatic energy from sea waves,
wherein the apparatus (1) comprises:
at least one first compartment (3) being in fluid communication with at least one second compartment (5) via a manifold (7) having an internal volume filled with a liquid, each of the compartments (3, 5) having an internal volume being variable between a first internal volume, and a second internal volume being smaller than the first internal volume;
wherein the at least one first compartment (3) is spaced-apart from the at least one second compartment (5); and
wherein the apparatus (1) in a position of use is at least partly submerged and holds a total volume of liquid that is larger than a volume of liquid within the manifold (7), but less than a sum of the volume of the liquid within the manifold (7) and a total first volume of the at least one first compartment (3) and the at least one second compartment (5),
**characterised in that** the volume of liquid within the manifold (7) is larger than the total volume of liquid within the at least one first compartment (3) and the at least one second compartment (5).

2. The apparatus (1) according to claim 1, wherein a longitudinal axis of the manifold (7) is arranged substantially in parallel to a prevailing movement direction of the sea waves.

3. The apparatus (1) according to claim 1 or 2, wherein the apparatus (1) comprises a plurality of manifolds (7) arranged in a matrix configuration.

4. The apparatus (1) according to any one of the preceding claims, wherein at least one of the compartments is operatively connected to the manifold (7) via a turbine house comprising a turbine (10) and an appurtenant generator (12) for generating electric energy from liquid flowing between the compartments (3, 5) and the manifold (7) in response to hydrostatic pressure variation caused by the sea waves, and wherein the at least one generator (12) is provided with a cable (14) for transferring the electrical energy to a consumer.

5. The apparatus (1) according to claim 4, wherein the apparatus (1) comprises more than one turbine (10) and appurtenant generator (12) for harvesting energy.

6. The apparatus (1) according to any of the preceding claims, wherein the liquid is water.

7. A power plant for harvesting energy from sea waves, **characterised in that** the power plant comprises the apparatus (1) according to any one of claims 4-6.

8. Method for extracting at least hydrostatic energy-from sea waves, **characterised in that** the method comprises:
- assembling an apparatus (1) according to any one of claims 1-6;
- filling the apparatus (1) with a liquid until a volume of liquid within the apparatus exceeds an internal volume of the manifold (7), but is less than a sum of the volume of the liquid within the manifold (7) and a total first internal volume of the at least one first compartment (3) and the at least one second compartment (5), and
- lowering the apparatus (1) to a desired position in a sea so that the apparatus is at least partly submerged, and securing the apparatus (1) with respect to a sea bed (SB).

## Patentansprüche

1. Vorrichtung (1) zum Extrahieren von mindestens hydrostatischer Energie aus Meereswellen, wobei die Vorrichtung (1) aufweist:
mindestens ein erstes Abteil (3), welches via einen Verteiler (7), welcher ein mit einer Flüssigkeit gefülltes Innenvolumen aufweist, in einer Fluidverbindung mit mindestens einem zweiten Abteil (5) steht, wobei jedes der Abteile (3, 5) ein Innenvolumen aufweist, welches variabel ist zwischen einem ersten Innenvolumen und einem zweiten Innenvolumen, welches kleiner ist als das erste Innenvolumen;
wobei das mindestens eine erste Abteil (3) von dem mindestens einen zweiten Abteil (5) beabstandet ist; und
wobei die Vorrichtung (1) in einer Betriebsstellung mindestens teilweise eingetaucht ist und ein Gesamtvolumen an Flüssigkeit enthält, welches grösser ist als ein Volumen an Flüssigkeit im Inneren des Verteilers (7), aber weniger als eine Summe des Volumens an Flüssigkeit im Inneren des Verteilers (7) und eines gesamten ersten Volumens des mindestens einen ersten Abteils (3) und des mindestens einen zweiten Abteils (5),
**dadurch gekennzeichnet, dass** das Volumen an Flüssigkeit im Inneren des Verteilers (7) grösser ist als das Gesamtvolumen an Flüssigkeit innerhalb des mindestens einen ersten Abteils (3) und des mindestens einen zweiten Abteils (5).

2. Vorrichtung (1) gemäss Anspruch 1, wobei eine Längsachse des Verteilers (7) im Wesentlichen parallel zu einer Hauptbewegungsrichtung der Meereswellen angeordnet ist.

3. Vorrichtung (1) gemäss Anspruch 1 oder 2, wobei die Vorrichtung (1) eine Vielzahl von Verteilern (7) aufweist, welche in einer Matrizenanordnung angeordnet sind.

4. Vorrichtung (1) gemäss einem der vorhergehenden Ansprüche, wobei mindestens eines der Abteile mit dem Verteiler (7) in einer Wirkverbindung steht via ein Turbinengehäuse aufweisend eine Turbine (10) und einen zugehörigen Generator (12) zur Erzeugung von elektrischer Energie aus einer Flüssigkeitsbewegung zwischen den Abteilen (3, 5) und dem Verteiler (7), als Antwort auf eine durch die Meereswellen verursachte hydrostatische Druckveränderung, und wobei der mindestens eine Generator (12) ein Kabel (14) aufweist zur Übertragung der elektrischen Energie an einen Verbraucher.

5. Vorrichtung (1) gemäss Anspruch 4, wobei die Vorrichtung (1) mehr als eine Turbine (10) und einen zugehörigen Generator (12) zur Energiegewinnung aufweist.

6. Vorrichtung (1) gemäss einem der vorhergehenden Ansprüche, wobei die Flüssigkeit Wasser ist.

7. Kraftwerk zur Gewinnung von Energie aus Meereswellen, **dadurch gekennzeichnet, dass** das Kraftwerk die Vorrichtung (1) gemäss einem der Ansprüche 4-6 aufweist.

8. Verfahren zum Extrahieren von mindestens hydrostatischer Energie aus Meereswellen, **dadurch gekennzeichnet, dass** das Verfahren beinhaltet:
- Zusammenbauen einer Vorrichtung (1) gemäss einem der Ansprüche 1-6;
- Füllen der Vorrichtung (1) mit einer Flüssigkeit, bis ein Volumen an Flüssigkeit im Inneren der Vorrichtung ein Innenvolumen des Verteilers (7) übersteigt, aber kleiner ist als eine Summe des Volumens an Flüssigkeit im Inneren des Verteilers (7) und eines gesamten ersten Innenvolumens des mindestens einen ersten Abteils (3) und des mindestens einen zweiten Abteils (5), und
- Absenken der Vorrichtung (1) bis auf eine gewünschte Position in einem Meer, sodass die Vorrichtung mindestens teilweise eingetaucht ist, und Befestigen der Vorrichtung (1) bezüglich eines Meeresgrunds (SB).

## Revendications

1. Un appareil (1) pour extraire au moins de l'énergie hydrostatique des vagues de la mer, dans lequel l'appareil (1) comprend :
au moins un premier compartiment (3) étant en communication fluidique avec au moins un deuxième compartiment (5) via un collecteur (7) ayant un volume interne rempli d'un liquide, chacun des compartiments (3, 5) ayant un volume interne étant variable entre un premier volume interne et un deuxième volume interne étant inférieur au premier volume interne ;
dans lequel l'au moins un premier compartiment (3) est espacé de l'au moins un deuxième compartiment (5) ; et
dans lequel l'appareil (1) en position d'utilisation est au moins partiellement submergé et contient un volume total de liquide étant supérieur à un volume de liquide à l'intérieur du collecteur (7), mais inférieur à la somme du volume du liquide à l'intérieur le collecteur (7) et un premier volume total de l'au moins un premier compartiment (3) et de l'au moins un deuxième compartiment (5),
**caractérisé en ce que** le volume de liquide à l'intérieur du collecteur (7) est supérieur au volume total de liquide à l'intérieur de l'au moins un premier compartiment (3) et de l'au moins un deuxième compartiment (5).

2. L'appareil (1) selon la revendication 1, dans lequel un axe longitudinal du collecteur (7) est disposé sensiblement parallèlement à une direction de mouvement dominante des vagues de la mer.

3. L'appareil (1) selon la revendication 1 ou 2, dans lequel l'appareil (1) comprend une pluralité de collecteurs (7) disposés selon une configuration matricielle.

4. L'appareil (1) selon l'une quelconque des revendications précédentes, dans lequel au moins un des compartiments est connecté de manière fonctionnelle au collecteur (7) via un boîtier de turbine comprenant une turbine (10) et un générateur associé (12) pour générer de l'énergie électrique à partir du liquide circulant entre les compartiments (3, 5) et le collecteur (7) en réponse à une variation de pression hydrostatique provoquée par les vagues de la mer, et dans lequel l'au moins un générateur (12) est pourvu d'un câble (14) pour transférer l'énergie électrique vers un consommateur.

5. L'appareil (1) selon la revendication 4, dans lequel l'appareil (1) comprend plus qu'une turbine (10) et un générateur associé (12) pour récolter de l'énergie.

6. L'appareil (1) selon l'une quelconque des revendications précédentes, dans lequel le liquide est de l'eau.

7. Une centrale électrique pour récolter l'énergie des vagues de la mer, **caractérisée en ce que** la centrale électrique comprend l'appareil (1) selon l'une quelconque des revendications 4 à 6.

8. Le procédé pour extraire au moins de l'énergie hydrostatique des vagues de la mer, **caractérisé en ce que** le procédé comprend :
- assembler un appareil (1) selon l'une quelconque des revendications 1 à 6 ;
- remplir l'appareil (1) avec un liquide jusqu'à ce qu'un volume de liquide à l'intérieur de l'appareil dépasse un volume interne du collecteur (7), mais soit inférieur à la somme du volume de liquide à l'intérieur du collecteur (7) et d'un premier volume total interne de l'au moins un premier compartiment (3) et de l'au moins un deuxième compartiment (5), et
- abaisser l'appareil (1) jusqu'à une position souhaitée dans une mer de telle sorte que l'appareil soit au moins partiellement submergé, et fixer l'appareil (1) par rapport à un fond marin (SB).
